(19) **Europäisches Patentamt**

**European Patent Office**

**Office européen des brevets**

(11) **EP 1 191 717 A2**

(12) **EUROPÄISCHE PATENTANMELDUNG**

(43) Veröffentlichungstag:
**27.03.2002   Patentblatt 2002/13**

(51) Int Cl.[7]: **H04B 10/155**

(21) Anmeldenummer: **01120265.2**

(22) Anmeldetag: **23.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.09.2000  DE 10047130**

(71) Anmelder: **SIEMENS AKTIENGESELLSCHAFT**
**80333 München (DE)**

(72) Erfinder: **Girardin, Francois, Dr.**
**80687 München (DE)**

(54) **Verfahren und Anordnung zur Stabilisierung der Wellenlänge von optischen WDM-Signalen**

(57)   In optischen WDM-Übertragungssystemen werden optische WDM-Signale (ocl bis ocN) mit Hilfe einer Multiplexereinheit (OM) zu einem optischen WDM-Übertragungsignals (WOC) zusammengefaßt und übertragen. Zur Stabilisierung der Wellenlänge (λ) der optischen WDM-Signale (oc1 bis ocN) wird sendesseitig jedes optische WDM-Signal (ocl bis ocN) mit mindestens einem Hilfsmodulationssignal (F1 bis FN) moduliert. Die modulierten, in einem optischen WDM-Übertragungssignals (WOC) zusammengefaßten WDM-Signale (oc1[F1] bis ocN[FN]) erfahren aufgrund der Filterfunktion (FF) der Multiplexereinheit (OM) eine Amplitudenmodulation. Die Änderung der Amplitude ($A_\lambda$) der Hilfsmodulationsignale (F1 bis FN) wird ermittelt und zur Regelung bzw. Stabilisierung der Wellenlänge (λ) der optischen WDM-Signale (oc1 bis ocN) eingesetzt.

## FIG 1

**Beschreibung**

Die Erfindung betrifft ein Verfahren und eine Anordnung zur Stabilisierung der Wellenlänge mehrerer in optischen Sendeeinheiten erzeugten optischen WDM-Signalen eines optischen WDM-Übertragungssystems, die in einer optischen Multiplexereinheit zu einem optischen WDM-Übertragungssignal zusammengefaßt werden.

In optischen Übertragungssystemen, insbesondere in nach dem WDM-Prinzip (Wavelength Division Multiplexing) arbeitenden Übertragungssystemen, sind mehrere eine unterschiedliche Wellenlänge aufweisende WDM-Kanäle zur Übertragung von optischen WDM-Signalen vorgesehen. Hierzu werden die optischen WDM-Signale durch optische Sendeeinheiten erzeugt und einem optischen Multiplexer zugeführt. Durch den optischen Multiplexer werden die einzelnen WDM-Kanäle bzw. optischen WDM-Signale zu einem optischen WDM-Übertragungssignal zusammengefaßt und somit leitungstechnisch konzentriert. Das optische WDM-Übertragungssignal wird anschließend über eine optische Übertragungsfaser zu einem optischen Demultiplexer übertragen, wobei das optische WDM-Übertragungssignal auf der optischen Übertragungsstrecke eine optische Verstärkung durch optische Faserverstärker erfahren kann. Durch den mehreren Empfangseinheiten vorgeschalteten optischen Demultiplexer werden die einzelnen WDM-Kanäle, genauer ausgedrückt die optischen WDM-Signale, aus dem optischen WDM-Übertragungssignal rückgewonnen und anschließend an jeweils eine nachgeschaltete optische Empfangseinheit übertragen.

Die Erzeugung eines WDM-Signals erfolgt üblicherweise mit Hilfe einer optischen Sendeeinheit, insbesondere einer Lasereinheit, dessen Wellenlänge für eine fehlerfreie Übertragung der optischen WDM-Signale innerhalb des WDM-Übertragungssystems eine vorgegebene Stabilität aufweisen muß. Um diese erforderliche Wellenlängenstabilität für jeden WDM-Kanal bzw. für jedes optische WDM-Signal zu erzielen, wird bei bereits realisierten WDM-Übertragungssystemen für jede optische Sendeeinheit eine spezielle Regeleinheit vorgesehen, die mit Hilfe einer optischen Komponente, beispielsweise eines "Optical Wavelength Lockers/Monitors", realisiert ist. Ein derartiger "Optical Wavelength Locker" ist beispielsweise in der Product Note der Firma Santec Optical Components von 1998 "Optical Wavelength Locker/Monitor - OWL-10" beschrieben.

Mit Hilfe eines derartigen "Optical Wavelength Locker" wird ein proportional zu der Wellenlänge des durch die optische Sendeeinheit erzeugten WDM-Signals verlaufendes elektrisches Steuersignal erzeugt, welches zur Regelung bzw. Stabilisierung der Wellenlänge des optischen WDM-Signals der jeweiligen optischen Sendeeinheit vorgesehen ist. Mit Hilfe des durch die optische Komponente erzeugten Steuersignales wird jede optische Sendeeinheit hinsichtlich einer normierten Wellenlänge stabilisiert. Hierbei sind insbesondere der Frequenzabstand zwischen zwei benachbarten WDM-Kanälen ("spacing"), die Übertragungsbitrate pro WDM-Kanal und die Filterfunktion des optischen Demultiplexers maßgeblich für die Stabilität der Wellenlänge des jeweiligen WDM-Kanals.

Mit Hilfe eines derartigen "Optical Wavelength Locker" ist somit eine Anpassung der Wellenlänge des von einer optischen Sendeeinheit erzeugten optischen WDM-Signals hinsichtlich der Filterfunktion des optischen Multiplexers möglich. Nachteilig ist jedoch, daß mit der Anzahl der zu übertragenden WDM-Kanäle bzw. der Anzahl der für die Erzeugung dieser erforderlichen optischen Sendeeinheiten die Kosten für eine derartige jeweils pro optisches WDM-Signal vorzusehende Stabilisierung der Wellenlänge linear ansteigen, da für jedes optische WDM-Signal jeweils ein "Optical Wavelength Locker" vorzusehen ist.

Die der Erfindung zugrunde liegende Aufgabe besteht darin, ein einfach zu realisierendes und somit kostengünstiges Verfahren zur Stabilisierung der Wellenlänge von optischen WDM-Signalen innerhalb eines optischen WDM-Übertragungssystems anzugeben. Die Aufgabe wird durch ein Verfahren gemäß den Patentansprüchen 1 oder 2 und eine Anordnung gemäß den Patentansprüchen 9 oder 10 gelöst.

Der wesentliche Aspekt des erfindungsgemäßen Verfahrens ist darin zu sehen, daß in den optischen Sendeeinheiten die optischen WDM-Signale mit mindestens einem Hilfsmodulationssignal moduliert werden. Anschließend wird ein Teil des optischen WDM-Übertragungssignals ausgekoppelt und in ein elektrisches Signal umgesetzt. Die Hilfsmodulationssignale werden aus dem elektrischen Signal rückgewonnen und jeweils die Amplitude der durch die Filterfunktion der Multiplexereinheit amplitudenmodulierten Hilfsmodulationssignale ermittelt sowie abhängig davon die Wellenlänge der optischen WDM-Signale geregelt. Vorteilhaft wird durch die Hilfsmodulation der optischen WDM-Signale mit mindestens einem eine festgelegte Frequenz aufweisenden Hilfsmodulationssignal jedem optischen WDM-Signal eine zusätzliche Information zugeordnet, die nach der Filterung des modulierten optischen WDM-Signals durch die Multiplexereinheit eine Veränderung aufweist und somit zur Stabilisierung der Wellenlängen der optischen WDM-Signale ausgewertet werden kann. Das zur Modulation, beispielsweise Frequenzmodulation benutzte Hilfsmodulationssignal erfährt aufgrund der Filterfunktion der Multiplexereinheit dann eine Amplitudenmodulation, wenn die durch die optische Sendeeinheit erzeugte Wellenlänge des optischen WDM-Signals nicht im optimalen Durchlaßbereich der Filterfunktion liegt. Erfindungsgemäß wird in der Regeleinheit die Amplitude des detektierten und separierten Hilfsmodulationssignals ermittelt und abhängig davon für jeweils eine optische Sendeeinheit ein Regelsignal zur Stabilisierung bzw. Regelung der Wellenlänge des optischen WDM-Signals gebildet. Somit können mehrere optische Sendeeinheiten mit Hilfe des erfindungsgemäßen Verfahrens hinsichtlich der Wellenlänge der erzeugten optischen WDM-Signale einfach und kostengünstig stabilisiert werden. Hierdurch kann der insbesondere bei einer hohen WDM-Kanalzahl erforderliche finanzielle Aufwand für das Vorsehen von jeweils einem optischen "Wavelength Locker/Monitor" pro WDM-Übertragungskanal erheblich reduziert werden.

In einer zweiten Variante des erfindungsgemäßen Verfahrens wird das optische WDM-Übertragungssignal an eine optische Demultiplexereinheit übertragen und die modulierten optischen WDM-Signale werden in der optischen Demultiplexereinheit aus dem optischen WDM-Übertragungssignal rückgewonnen. Ein Teil der rückgewonnenen modulierten optischen WDM-Signale wird ausgekoppelt und in elektrische Signal umgesetzt. Aus den elektrischen Signalen werden die Hilfsmodulationssignale rückgewonnen und jeweils die Amplitude der durch die Filterfunktionen der Multiplexereinheit und der Demultiplexereinheit amplitudenmodulierten Hilfsmodulationssignale ermittelt. Anschließend wird abhängig von den ermittelten Amplitude die Wellenlänge der optischen WDM-Signale geregelt. Vorteilhaft wird bei der zweiten Variante des erfindungsgemäßen Verfahren sowohl die Filterfunktion der optischen Multiplexereinheit als auch der optischen Demultiplexereinheit bei der Stabilisierung der Wellenlänge in den optischen Sendeeinheiten berücksichtigt, wodurch eine technisch einfach realisierbare und kostengünstige Stabilisierung der Wellenlänge hinsichtlich der kompletten WDM-Übertragungsstrecke realisierbar wird.

Vorteilhaft weisen die Frequenzen der Modulationssignale für die Frequenzmodulation der optischen WDM-Signale Frequenzen von 10 bis 80 kHz auf. Durch den Einsatz derartig niederfrequenten Hilfsmodulationssignale, welche unterhalb des WDM-Übertragungsfrequenzbands des optischen WDM-Übertragungsignals liegen, wird ein Nebensprechen der Hilfsmodulationssignale in die WDM-Kanäle vermieden. Zusätzlich ist die für die Regelung erforderliche Detektion eines niederfrequenten Hilfsmodulationssignals technisch wesentlich einfacher realisierbar als die Detektion hochfrequenter Modulationssignale.

Besonders vorteilhaft werden für die Modulation der optischen WDM-Signale unterschiedliche Hilfsmodulationssignale oder ein einziges Hilfsmodulationssignal verwendet, wobei bei der Verwendung eines einzigen Hilfsmodulationssignals jedem optischen WDM-Signal ein eigener Zeitschlitz zugeordnet wird, in dem nur das optische WDM-Signal mit dem einzigen Hilfsmodulationssignal moduliert wird. Hierdurch kann die für den jeweiligen Anwendungsfall vorteilhafteste Lösung zur Zuordnung eines Hilfsmodulationssignals zu beispielsweise einer oder mehreren optischen Sendeeinheiten bzw. dem oder den erzeugten optischen WDM-Signalen ausgewählt werden.

Ein weiterer Vorteil des erfindungsgemäßen Verfahrens ist darin zu sehen, daß der Regeleinheit mindestens ein Referenztaktsignal der optischen Sendeeinheiten des optischen WDM-Übertragungssystems zugeführt wird und mindestens ein Hilfsmodulationssignal mit Hilfe des mindestens einen Referenztaktsignals aus dem mindestens einen elektrischen Signal rückgewonnen wird. Mit Hilfe der über die Kommunikationsverbindung von den optischen Sendeeinheiten an die Regeleinheit übertragenen Referenztaktsignale kann besonders vorteilhaft eine empfindliche Synchrondetektion der im elektrischen Signal enthaltenen, beispielsweise unterschiedliche Modulationsfrequenzen aufweisenden Hilfsmodulationssignale durchgeführt werden, wodurch eine präzise Bestimmung der Amplitude der Hilfsmodulationssignale und somit die Gewinnung eines geeigneten Regelkriteriums zur Regelung der Wellenlänge der optischen Sendeeinheiten realisierbar wird.

Weitere vorteilhafte Ausgestaltungen des erfindungsgemäßen Verfahrens, insbesondere eine Anordnung zur Stabilisierung der Wellenlänge mehrerer in optischen Sendeeinheiten erzeugten optischen WDM-Signale, sind den weiteren Ansprüchen zu entnehmen.

Im folgenden werden Ausführungsbeispiele der Erfindung anhand von drei Prinzipschaltbildern und einem Diagramm näher erläutert.

Figur 1    zeigt in einem Prinzipschaltbild eine Sendeeinrichtung eines WDM-Übertragungssystems,

Figur 2    zeigt in einem Diagramm beispielhaft die Filterfunktion einer optischen Multiplexereinheit für einen WDM-Kanal,

Figur 3    zeigt beispielhaft in einem weiteren Prinzipschaltbild die erfindungsgemäße Regeleinheit zur Stabilisierung der Wellenlänge von optischen Signalen und

Figur 4    zeigt in einem Prinzipschaltbild eine alternative Realisierung des erfindungsgemäßen Verfahrens innerhalb eines WDM-Übertragungssystems.

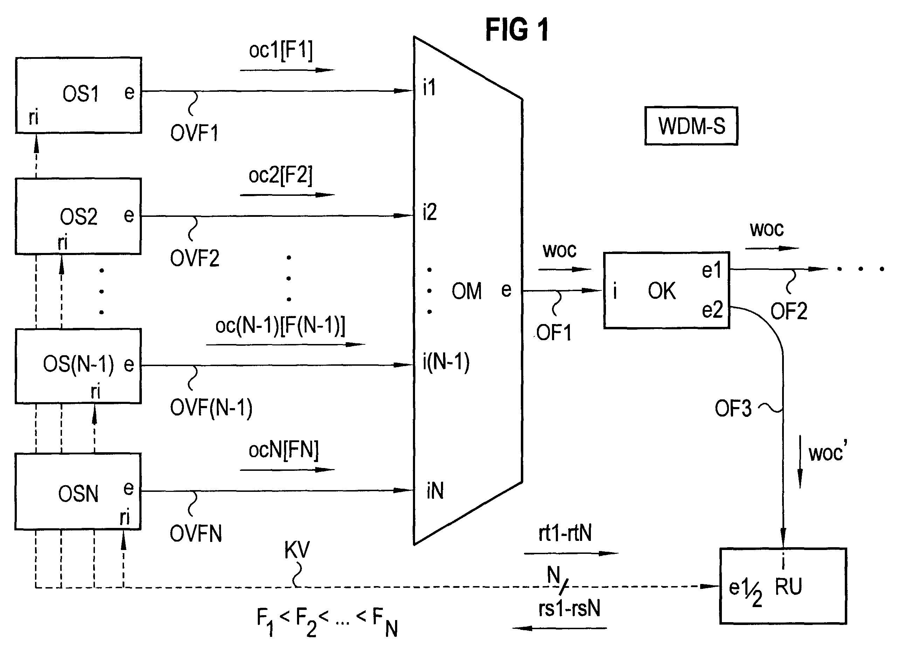

In Figur 1 ist beispielhaft eine Sendeeinrichtung eines WDM-Übertragungssystems WDM-S dargestellt, welche eine erste bis N-te optische Sendeeinheit OS1 bis OSN, eine optische Multiplexereinheit OM, eine optische Koppeleinheit OK und eine Regeleinheit RU aufweist. Die ersten bis N-ten optischen Sendeeinheiten OS1 bis OSN sind über erste bis N-te optische Verbindungsfasern OVF1 bis OVFN an die optische Multiplexereinheit OM angeschlossen. Der Ausgang e der ersten optischen Sendeeinheit OS1 ist mit den ersten Eingang i1 der optischen Multiplexereinheit OM über die erste optische Verbindungsfaser OFV1 verbunden. Entsprechend sind die weiteren optischen Sendeeinheiten OS2 bis OSN über weitere optische Verbindungsfasern OVF2 bis OVFN an die Eingänge i2 bis iN der optischen Multiplexereinheit OM geführt.

Die zwischen der zweiten und N-1-ten optischen Sendeeinheit OS2,OSN liegenden dritten bis N-2-ten optischen Sendeeinheiten OS3 bis OS(N-2) sind in Figur 1 nicht explizit dargestellt, sondern sind mit Hilfe einer strichliert gezeichneten Linie angedeutet.

Außerdem ist der Ausgang e der optischen Multiplexereinheit OM über eine erste optische Faser OF1 mit dem Eingang i der optischen Koppeleinheit OK verbunden, an dessen ersten Ausgang e1 eine zweite optische Faser OF2 und an dessen zweiten Ausgang e2 eine dritte optische Faser OF3 geführt sind.

Die zweite optische Faser OF2 ist zugleich die innerhalb des optischen Übertragungssystems WDM-S zur Übertragung des optischen WDM-Übertragungssignals WOC vorgesehene Übertragungsfaser. Die dritte optischen Faser OF3 verbindet den zweiten Ausgang e2 der optischen Koppeleinheit OK mit dem Eingang i der Regeleinheit RU. Zusätzlich weist die Regeleinheit RU einen Regelanschluß e1/e2 auf, der über eine Kommunikationsverbindung KV jeweils mit der ein bis N-ten optischen Sendeeinheit OS1 bis OSN verbunden ist, wobei die Kommunikationsverbindung KV aus entweder 2*N-Signalübertragungsleitungen oder N bidirektionale Übertragungsleitungen besteht. Die 2*N-Signalübertragungsleitungen oder die N bidirektionalen Übertragungsleitungen sind in Figur 1 nicht explizit dargestellt, sondern sind durch die Anzahl N angedeutet. Eine derartige Kommunikationsverbindung KV kann beispielsweise als elektrische Übertragungsleitungen innerhalb eines optischen Netzelements realisiert sein.

In der ersten bis N-ten optischen Sendeeinheit OS1 bis OSN wird jeweils ein optisches WDM-Signal oc1 bis ocN erzeugt, welches mit einem ersten bis N-ten Hilfsmodulationssignal F1 bis FN moduliert wird. Beispielsweise kann eine Frequenz- oder Phasenmodulation des der optischen WDM-Signale oc1 bis ocN mit den ersten bis N-ten Hilfsmodulationssignalen F1 bis FN erfolgen. Das erste bis N-te modulierte optische WDM-Signal oc1[F1] bis ocN[FN] wird an den ersten bis N-ten Eingang i1 bis iN der optischen Multiplexereinheit OM gesteuert. Gemäß dem in Figur 1 dargestellten Ausführungsbeispiel wird von der ersten optischen Sendeeinheit OS1 ein erstes, mit einem ersten Hilfsmodulationssignal F1 moduliertes optisches WDM-Signal oc1[F1] erzeugt und über die erste optische Verbindungsfaser OVF1 an den ersten Eingang i1 der optischen Multiplexereinheit OM übertragen. Analog hierzu werden in der zweiten bis N-ten optischen Sendeeinheit OS2 bis OSN zwei bis N-te, mit den zwei bis N-ten Hilfssignalsignalen F2 bis FN modulierte optische WDM-Signale oc2[F2] bis ocN[FN] erzeugt und an den zweiten bis N-ten Eingang i2 bis iN der optischen Multiplexereinheit OM zugeführt.

Im dargestellten Ausführungsbeispiel weisen die zur Modulation verwendeten ersten bis N-ten Hilfsmodulationssignal F1 bis FN ansteigende Frequenzen auf, d.h.

$$F1 < F2 < F3 < ... < F(N-1) < FN.$$

Alternativ hierzu kann auch eine Modulation der optischen WDM-Signale oc1 bis ocN mit jeweils nur einem, beispielsweise dem ersten Hilfsmodulationssignal F1 durchgeführt werden, wobei hierbei jedem optischen WDM-Signal os1 bis osN ein eigener Zeitschlitz zugeordnet wird, in dem das optische WDM-Signal os1 bis osN mit dem einzigen Hilfsmodulationssignal F1 moduliert wird. Durch die Bereitstellung genau eines Zeitschlitzes für die Modulation eines optischen WDM-Signals oc1 bis ocN wird die für die Regelung erforderliche Zuordnung eines Hilfsmodulationssignals zu einer optischen Sendeeinheit OS1 bis OSN realisiert.

Mit Hilfe der optischen Multiplexereinheit OM werden das erste bis N-te modulierte optische WDM-Signal oc1[F1] bis ocN[FN] leitungstechnisch konzentriert, d.h. zu einem optischen WDM-Übertragungssignal WOC zusammengefaßt, das am Ausgang e der optischen Multiplexereinheit OM ausgesendet wird. Vom Ausgang e der optischen Multiplexereinheit OM gelangt das optische WDM-Übertragungssignal WOC über die erste optische Faser OF1 an den Eingang i der optischen Koppeleinheit OK.

Mit Hilfe der optischen Koppeleinheit OK wird ein Teil des optischen WDM-Übertragungssignals WOC' ausgekoppelt und der Hauptanteil des optischen WDM-Übertragungssignals WOC am ersten Ausgang e1 der optischen Koppeleinheit OK ausgesendet, der über die Übertragungsfaser OF2 des optischen WDM-Übertragungssystems WDM-S zu einer - in Figur 1 nicht dargestellten - optischen Demultiplexereinheit ODM übertragen wird. Der ausgekoppelte Teil des optischen WDM-Übertragungssignals WOC' wird vom zweiten Ausgang e2 der optischen Koppeleinheit OK über die dritte optische Faser OF3 an den Eingang i der Regeleinheit RU übermittelt.

In der Regeleinheit RU wird der ausgekoppelte Teil des optischen WDM-Übertragungssignals WOC' bewertet und mit Hilfe der über die Kommunikationsverbindung KV an den Ausgang i der Regeleinheit RU übermittelten ersten bis N-ten Referenztaktsignale rt1 bis rtN werden erste bis N-te Regelsignale rs1 bis rsN gebildet. Die in der Regeleinheit RU gebildeten ersten bis N-ten Regelsignale rs1 bis rsN werden über die Kommunikationsverbindung KV an die jeweilige erste bis N-te optische Sendeeinheit OS1 bis OSN bzw. an jeweils den Regeleingang ri der ersten bis N-ten optischen Sendeeinheit OS1 bis OSN übertragen.

Mit Hilfe des beispielsweise in der ersten optischen Sendeeinheit OS1 empfangenen ersten Regelsignals rs1 wird die Wellenlänge des in der ersten optischen Sendeeinheit OS1 erzeugten ersten optischen WDM-Signals oc1[F1] stabilisiert bzw. geregelt. Analog hierzu wird mit Hilfe der zweiten bis N-ten Regelsignale rs2 bis rsN jeweils die Wellenlänge der in den zweiten bis N-ten optischen Sendeeinheiten OS2 bis OSN erzeugten zweiten bis N-ten optischen WDM-Signale oc2 [F2] bis ocN[FN] stabilisiert bzw. geregelt.

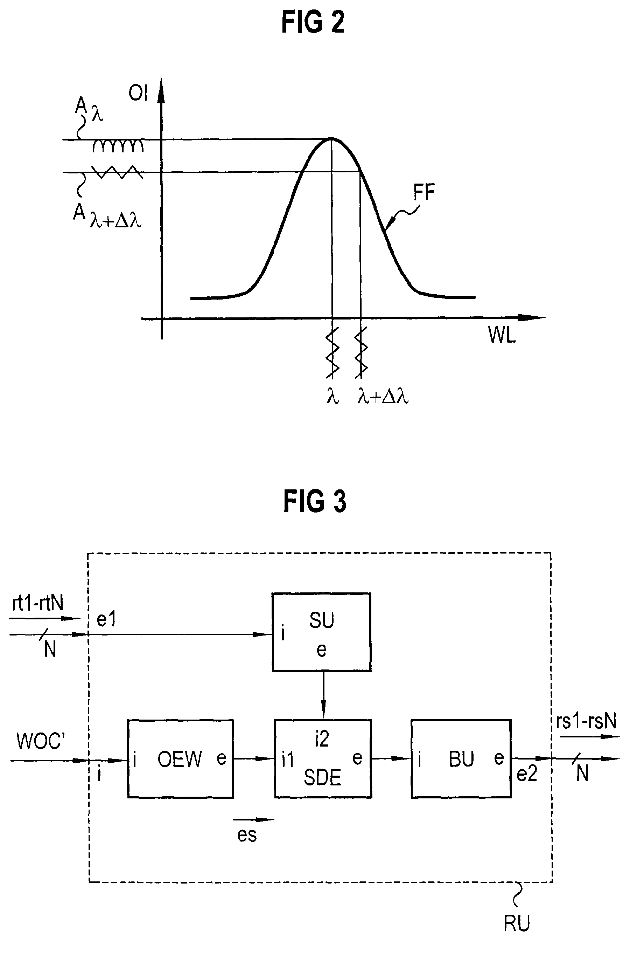

In Figur 2 ist in einem Diagramm D die Filterfunktion FF der optischen Multiplexereinheit OM für beispielsweise ein optisches WDM-Signal dargestellt, wobei an der horizontalen Achse WL die Wellenlänge $\lambda$ des optischen WDM-Signals oc1 bis ocN und an der vertikalen Achse OI die Amplitude $A_\lambda$ des optischen WDM-Signals oc1 bis ocN angetragen sind. Die Filterfunktion FF weist ihr Maximum bei der WDM-Wellenlänge $\lambda$ beispielsweise des ersten optischen WDM-Signals oc1 auf. Im Durchlaßbereich, d.h. beim Maximum der optischen Filterfunktion FF für einen WDM-Kanal tritt eine verschwindend geringe bzw. nahezu den Wert 0 annehmende Amplitudenmodulation des ersten Hilfsmodulationssignals F1 durch die optische Multiplexereinheit OM auf. Bei einer Verschiebung der zu stabilisierenden Wellenlänge $\lambda$ um den Betrag von $\Delta\lambda$ erhöht sich der Betrag der Amplitude $A_\lambda$ auf einen Wert von $A_{\lambda+\Delta\lambda}$, welcher ebenfalls an der vertikalen Achse OI angetragen ist. Anhand der Zunahme der Amplitude des ersten Hilfsmodulationssignals FI von $A_\lambda$ auf $A_{\lambda+\Delta\lambda}$, die durch eine Verschiebung der optimalen Durchlaßwellenlänge $\lambda$ um den Betrag $\Delta\lambda$ hervorgerufen wird, wird das für die Stabilisierung der ersten optischen Sendeeinheiten OS1 bzw. der weiteren optischen Sendeeinheiten OS2 bis OSN eingesetzte Regelkriterium deutlich. Die Kontrolle bzw. Stabilisierung der Wellenlänge WL, $\lambda$ des beispielsweise des ersten optischen WDM-Signals OC1 erfolgt durch die Auswertung bzw. durch die Bewertung der Amplitude $A_{\lambda+\Delta\lambda}$ der durch die Filterfunktion FF der Multiplexereinheit OM amplitudenmodulierten ersten Hilfsmodulationssignals F1. Entsprechend sind für die weiteren optischen WDM-Kanäle bzw. WDM-Signale OS2 bis OSN unterschiedliche Filterfunktionen FF der optischen Multiplexereinheit OM auszuwerten.

Hierzu wird die bereits in Figur 1 dargestellte Regeleinheit RU mit Hilfe eines schematisch dargestellten Blockschaltbildes in Figur 3 näher erläutert. Die Regeleinheit RU weist insbesondere einen Eingang i und einen Regelanschluß e1/e2 auf, welcher in Figur 3 in einen ersten und zweiten Anschluß e1 bzw. e2 dargestellt ist. Des Weiteren weist die Regeleinheit RU eine Selektionseinheit SU, eine opto-elektrische Wandlereinheit OEW, eine Synchrondetektionseinheit SDE sowie eine Bewertungseinheit BU auf. Der Eingang i der Regeleinheit RU ist mit dem Eingang e der opto-elektrischen Wandlereinheit OEW verbunden, dessen Ausgang e an den ersten Eingang i1 der Synchrondetektionseinheit SDE angeschlossen ist. An den zweiten Eingang i2 der Synchrondetektionseinheit SDE ist der Ausgang e der Synchronisationseinheit SU angeschlossen. Entsprechend ist der Ausgang e der Synchrondetektionseinheit SDE an den Eingang i der Bewertungseinheit BU geführt, deren Ausgang e mit dem zweiten Anschluß e2 der Regeleinheit RU verbunden ist. Der erste Anschluß e1 der Regeleinheit RU ist mit dem Eingang i der Synchronisierungseinheit SU verbunden. Des Weiteren ist an den Eingang i der Regeleinheit RU - wie bereits in Figur 1 angedeutet - die dritte optische Faser OF3 angeschlossen und an den ersten und zweiten Anschluß e1,e2 der Regeleinheit RU ist die Kommunikationsverbindung KV geführt, die insbesondere zur Übertragung der ersten bis N-ten Regelsignale rs1 bis rsN und zur Übertragung der 1 bis N-ten Referenztaktsignale rt1 bis rtN vorgesehen ist.

Mit Hilfe der dritten optischen Faser OF3 wird der ausgekoppelte Teil des optischen WDM-Übertragungssignals WOC' an den Eingang i der Regeleinheit RU übertragen bzw. an den Eingang i der opto-elektrischen Wandlereinheit OEW gesteuert. Mit Hilfe der opto-elektrischen Wandlereinheit OEW wird der ausgekoppelte Teil des optischen WDM-Übertragungssignales WOC' in ein elektrisches Signal es umgesetzt, das vom Ausgang e der opto-elektrischen Wandlereinheit OEW an den ersten Eingang i1 der Synchrondetektionseinheit SDE übertragen wird. Die opto-elektrische Wandlereinheit OEW weist beispielsweise eine Bandbreite auf, welche kleiner als der kleinste Übertragungsfrequenzanteil des optischen WDM-Übertragungssignals WOC und größer als die Frequenz des Modulationssignals mit der größten, beispielsweise der N-ten Modulationsfrequenz FN ist.

Die über die bidirektionale Kommunikationsverbindung KV an den von der ersten bis N-ten optischen Sendeeinheit OS1 bis OSN an den ersten Anschluß e1 der Regeleinheit RU übertragenen Referenztaktsignale rt1 bis rtN werden vom ersten Anschluß e1 der Regeleinheit RU an den Eingang i der Synchronisationseinheit SU übertragen. Mit Hilfe der Synchronisationseinheit SU werden die Referenztaktsignale rt1 bis rtN zur Selektion der jeweiligen optischen WDM-Signale oc1 bis ocN aufbereitet und vom Ausgang e der Synchronisationseinheit SU an den zweiten Eingang i2 der Synchrondetektionseinheit SDE übertragen. Mit Hilfe der aufbereiteten Referenztaktsignale rt1 bis rtN werden in der Synchrondetektionseinheit SDE die Hilfsmodulationssignale F1 bis FN aus dem elektrischen Signal es rückgewonnen, d.h. das elektrische Signal es wird beispielsweise mit den aufbereiteten Referenztaktsignalen rt1 bis rtN korreliert und somit die einzelnen Hilfsmodulationssignale F1 bis FN aus dem elektrischen Signal es selektiert.

Die mit Hilfe der Synchrondetektionseinheit SDE rückgewonnenen optischen Hilfsmodulationssignale F1 bis FN werden hinsichtlich der durch die Filterfunktion FF der optischen Multiplexereinheit OM hervorgerufenen Amplitudenmodulation bewertet, d.h. die Größe der Amplitude der rückgewonnenen optischen Hilfsmodulationssignale F1 bis FN wird bestimmt. Hierzu werden die rückgewonnenen Hilfsmodulationssignale F1 bis FN an den Eingang i der optischen Bewertungseinheit BU übertragen und in dieser für das jeweilige Hilfsmodulationssignal F1 bis FN die aktuelle Amplitude $A_\lambda$ ermittelt und daraus ein Regelsignal rs1 bis rsN zu Stabilisierung der Wellenlänge $\lambda$ des jeweiligen

optischen WDM-Signals oc1 bis ocN gebildet.

Im Idealfall, d.h. die Wellenlänge $\lambda$ des optischen WDM-Signals oc1 bis ocN liegt exakt im Durchlaßbereich der Filterfunktion FF der optischen Multiplexereinheit OM, weist das rückgewonnene Hilfsmodulationssignal F1 bis FN eine Amplitude $A_\lambda$ von nahezu dem Wert 0 auf. In diesem Idealfall wird durch die Regelung die Wellenlänge $\lambda$ des optischen WDM-Signals oc1 bis ocN bzw. der zugehörigen optischen Sendeeinheit OS1 bis OSN um den eingestellten Wellenlängenwert gehalten. Im Gegensatz hierzu wird sich die Amplitude $A_{\lambda+\Delta\lambda}$ des rückgewonnenen Hilfsmodulationssignals F1 bis FN bei einer leichten Abweichung der Wellenlänge $\lambda$ des optischen WDM-Signals oc1 bis ocN um den Betrag $\Delta\lambda$ deutlich erhöhen und keinesfalls gleich null sein. Die Höhe der von null abweichenden Amplitude des Hilfsmodulationssignals F1 bis FN wird in der Bewertungseinheit BU zur Bildung der Regelsignale rs1 bis rsN ausgewertet, welche über die Kommunikationsverbindung KV an die zugehörigen optischen Sendeeinheiten OS1 bis OSN zur Regelung bzw. Stabilisierung der Wellenlänge $\lambda$ der optischen WDM-Signale ocl bis ocN übertragen werden.

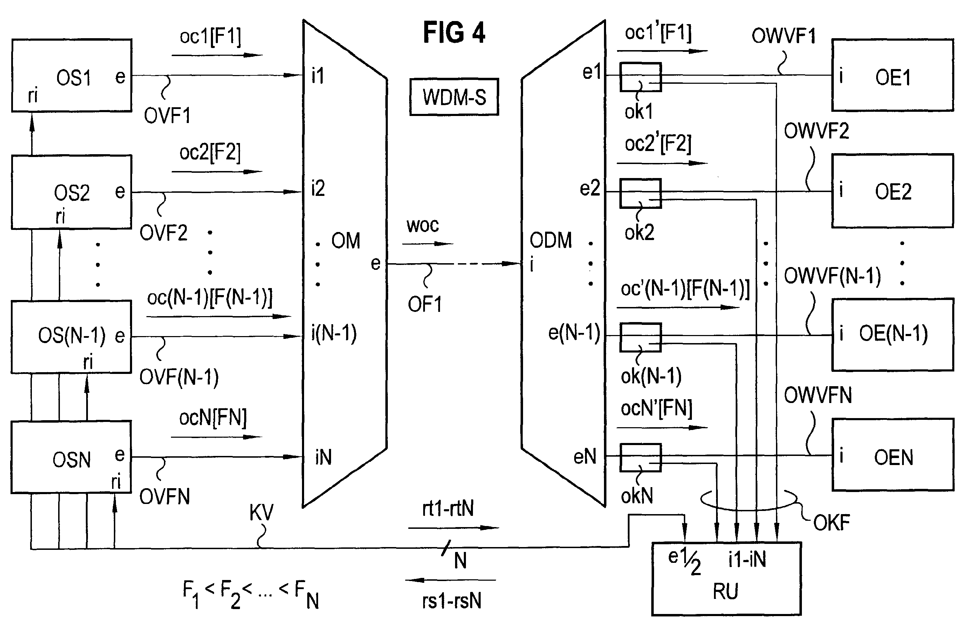

In Figur 4 ist eine weitere Variante des erfindungsgemäßen Verfahrens in einem Prinzipschaltbild dargestellt, wobei die in Figur 1 dargestellte optische Sendeeinrichtung eines optischen WDM-Übertragungssystems WDM-S um eine optische Demultiplexereinheit ODM und ein bis N-te optische Empfangseinheiten OE1 bis OEN erweitert ist. An den Eingang i der optischen Demultiplexereinheit ODM ist die erste optische Faser OF1 angeschlossen und der erste bis N-te Ausgang e1 bis eN der optischen Demultiplexereinheit ODM ist jeweils über eine weitere erste bis N-te optische Verbindungsfaser OWVF1 bis OWVFN mit den ersten bis N-ten optischen Empfangseinheiten OE1 bis OEN verbunden.

Zusätzlich sind erste bis N-te optische Koppeleinheiten OK1 bis OKN zwischen jeweils einem Ausgang e1 bis eN und dem Eingang i der ersten bis N-ten optischen Empfangseinheiten OE1 bis OEN zur Auskopplung eines Teils der durch die optische Demultiplexereinheit ODM rückgewonnenen modulierten ersten bis N-ten optischen WDM-Signale oc1'[F1] bis ocN'[FN] vorgesehen. Die ersten bis N-ten optischen Koppeleinheiten OK1 bis OKN sind über optische Koppelfasern OKF mit den ein bis N-ten Eingängen i1 bis iN der Regeleinheit RU verbunden, deren Regelanschluß e1/e2 analog zur Figur 1 über die Kommunikationsverbindung KV an die erste bis N-te optische Sendeeinheit OS1 bis OSN angeschlossen ist.

Die zwischen der zweiten und N-1-ten optischen Empfangseinheit OE2,OE(N-1) liegenden dritten bis N-2-ten optischen Empfangseinheiten OE3 bis OE(N-2) sind in Figur 1 nicht explizit dargestellt, sondern sind mit Hilfe einer strichliert gezeichneten Linie angedeutet.

Analog zu dem in Figur 1 dargestellten Ausführungsbeispiel wird das erfindungsgemäß erzeugte optische WDM-Übertragungssignal WOC über die erste optische Faser OF1 an den Eingang i der optischen Demultiplexereinheit ODM übertragen, in der optischen Demultiplexereinheit ODM leitungstechnisch dekonzentriert und die rückgewonnenen modulierten optischen ersten bis N-ten optischen WDM-Signale oc1'[F1] bis ocN'[FN] an den ersten bis N-ten Ausgängen e1 bis eN ausgesendet. Mit Hilfe der ersten bis N-ten optischen Koppeleinheiten OK1 bis OKN wird jeweils ein Teil der rückgewonnenen modulierten ersten bis N-ten optischen WDM-Signale oc1'[F1] bis ocN'[FN] ausgekoppelt und der Hauptteil der rückgewonnenen modulierten ersten bis N-ten optischen WDM-Signale oc1'[F1] bis ocN'[FN] über die ersten bis N-ten weiteren optischen Verbindungsfasern OWVF1 bis OWVFN an die erste bis N-te optische Empfangseinheit OE1 bis OEN übertragen.

Die ausgekoppelten Teile der rückgewonnenen modulierten ersten bis N-ten optischen WDM-Signale oc1'[F1] bis ocN'[FN] werden über die optischen Koppelfasern OKF an den ersten bis N-ten Eingang i1 bis iN der Regeleinheit RU übertragen. Analog zu dem in Figur 3 dargestellten Regelungsverfahren werden die ausgekoppelten Teile der rückgewonnenen modulierten ersten bis N-ten optischen WDM-Signale oc1'[F1] bis ocN'[FN] in erste bis N-te elektrische Signale es1 bis esN umgesetzt, aus denen mit Hilfe der aufbereiteten Referenztaktsignale rt1 bis rtN das erste bis N-te Hilfsmodulationssignal F1 bis FN selektiert wird.

Entsprechend dem erfindungsgemäßen Verfahren wird in der Bewertungseinheit BU der Regeleinheit RU die Amplitude $A_\lambda$ der selektierten ersten bis N-ten Hilfsmodulationssignale F1 bis FN ermittelt und gemäß der ermittelten Amplitude $A_\lambda$ ein bis N-te Regelsignale rs1 bis rsN zur Stabilisierung der Wellenlänge $\lambda$ der in der ein bis N-ten optischen Sendeeinheiten OS1 bis OSN erzeugten optischen WDM-Signale ocl bis ocN gebildet. Die ein bis N-ten optischen Regelsignale rs1 bis rsN werden über die Kommunikationsverbindung KV an die zugehörigen Regeleingänge ri der ein bis N-ten optischen Sendeeinheiten OS1 bis OSN übertragen.

Bei einem weiteren Ausführungsbeispiel der Erfindung wird die in Figur 4 dargestellte Stabilisierung der Wellenlänge mehrerer optischer WDM-Signale oc1 bis ocN ohne die empfindliche Synchrondetektion, d.h. ohne eine Selektion der Hilfsmodulationssignale F1 bis FN anhand der ein bis N-ten Referenztaktsignale rt1 bis rtN durchgeführt. Entsprechend wird die Amplitude $A_\lambda$ der ersten bis N-ten elektrischen Signale es1 bis esN ermittelt und abhängig davon ein ein bis N-tes Regelsignal rs1 bis rsN gebildet. Hierdurch wird die empfindliche Synchrondetektion zur Ermittlung der ersten bis N-ten Hilfsmodulationssignale F1 bis FN eingespart.

Wird zur Modulation der ersten bis N-ten optischen WDM-Signale oc1 bis ocN in den optischen Sendeeinheiten OS1 bis OSN jeweils nur ein, beispielsweise das erste Hilfsmodulationssignal F1 verwendet, wird in der Regeleinheit RU das elektrische Signal es zeitschlitzabhängig ausgewertet. Ist beispielsweise der ersten optischen Sendeeinheit OS1 für die Modulation mit der ersten Hilfssignalfrequenz F1 der erste Zeitschlitz zugeordnet, so wird das erste Regelsignal rs1 zur Stabilisierung der Wellenlänge des ersten optischen WDM-Signals oc1 anhand der im ersten Zeitschlitz ermittelten Amplitude $A_\lambda$ des selektierten ersten Hilfsmodulationssignals F1 gebildet. Analog hierzu werden die weiteren Zeitschlitze abgearbeitet und entsprechend die weiteren Regelsignale rs2 bis rsN ermittelt. Bei einer derartigen Realisierung der Stabilisierung der Wellenlängen $\lambda$ der ein bis N-ten WDM-Signale oc1 bis ocN werden die einzelnen optischen Sendeeinheiten OS1 bis OSN nacheinander stabilisiert und die Regelsignale rs1 bis rsN beispielsweise über den "Optical Supervisory Channel" an die optischen Sendeeinheiten OS1 bis OSN übertragen.

Die Frequenzen der Hilfsmodulationssignale F1 bis FN werden vorzugsweise derart festgelegt, daß kein Nebensprechen in den optischen WDM-Signalen bzw. WDM-Kanälen oc1 bis ocN hervorgerufen wird. Im dargestellten Ausführungsbeispiel liegen die Frequenzen der Hilfsmodulationssignale F1 bis FN beispielsweise im Frequenzbereich von 10 bis 80 kHz. Des Weiteren ist bei einer hohen Anzahl von optischen WDM-Signalen oc1 bis ocN eine Mehrfachnutzung der für die Modulation vorgesehenen Frequenzen bzw. des vorgesehenen Frequenzbandes F1 bis FN möglich, wobei hierzu mehrere optische WDM-Signale oc1 bis ocN zu Kanalgruppen zusammengefaßt werden. Entsprechend ist für jede Kanalgruppe jeweils eine eigene Regeleinheit RU zur getrennten Selektion der optischen WDM-Signale vorzusehen.

**Patentansprüche**

1.  Verfahren zur Stabilisierung der Wellenlänge ($\lambda$) mehrerer in optischen Sendeeinheiten (OS1 bis OSN) erzeugten optischen WDM-Signale (oc1 bis ocN) eines optischen WDM-Übertragungssystems (WDM-S), die in einer optischen Multiplexereinheit (OM) zu einem optischen WDM-Übertragungssignal (WOC) zusammengefaßt werden,
    **dadurch gekennzeichnet,**
    **daß** in den optischen Sendeeinheiten (OS1 bis OSN) die optischen WDM-Signale (oc1 bis ocN) mit mindestens einem Hilfsmodulationssignal (F1 bis FN) moduliert werden,
    **daß** ein Teil des optischen WDM-Übertragungssignals (WOC) ausgekoppelt und in ein elektrisches Signal (es) umgesetzt wird, daß die Hilfsmodulationssignale (F1 bis FN) aus dem elektrischen Signal (es) rückgewonnen werden,
    **daß** jeweils die Amplitude ($A_\lambda$) der durch die Filterfunktion (FF) der Multiplexereinheit (OM) amplitudenmodulierten Hilfsmodulationssignale (F1 bis FN) ermittelt wird und abhängig davon die Wellenlänge ($\lambda$) der optischen WDM-Signale (oc1 bis ocN) geregelt wird.

2.  Verfahren zur Stabilisierung der Wellenlänge ($\lambda$) mehrerer in optischen Sendeeinheiten (OS1 bis OSN) erzeugten optischen WDM-Signale (ocl bis ocN) eines optischen WDM-Übertragungssystems (WDM-S), bei dem die optischen WDM-Signale (oc1 bis ocN) in einer optischen Multiplexereinheit (OM) zu einem optischen WDM-Übertragungssignal (WOC) zusammengefaßt werden,
    bei dem das optische WDM-Übertragungssignal (WOC) an eine optische Demultiplexereinheit (ODM) übertragen wird, in der die optischen WDM-Signale (oc1 bis ocN) aus dem optischen WDM-Übertragungssignal (WOC) rückgewonnen werden,
    **dadurch gekennzeichnet,**
    **daß** in den optischen Sendeeinheiten (OS1 bis OSN) die optischen WDM-Signale (ocl bis ocN) mit mindestens einem Hilfsmodulationssignal (F1 bis FN) moduliert werden,
    **daß** jeweils ein Teil der rückgewonnenen optischen WDM-Signale (oc1'[F1] bis ocN'[FN]) ausgekoppelt und in ein elektrisches Signal (es1 bis esN) umgesetzt wird,
    **daß** die Hilfsmodulationssignale (F1 bis FN) aus den elektrischen Signalen (es1 bis esN) rückgewonnen werden,
    **daß** jeweils die Amplitude ($A_\lambda$) der durch die Filterfunktionen (FF) der Multiplexereinheit (OM) und der Demultiplexereinheit (ODM) amplitudenmodulierten Hilfsmodulationssignale (F1 bis FN) ermittelt wird und abhängig davon die Wellenlänge ($\lambda$) der optischen WDM-Signale (oc1 bis ocN) geregelt wird.

3.  Verfahren nach Anspruch 1 oder 2,
    **dadurch gekennzeichnet,**
    **daß** die optischen WDM-Signale (oc1 bis ocN) mit Hilfsmodulationssignalen (F1 bis FN) moduliert werden, die Frequenzen von 10 bis 80 kHz aufweisen.

4.  Verfahren nach einem der Ansprüche 1 bis 3,
    **dadurch gekennzeichnet,**
    **daß** für die Modulation der optischen WDM-Signale (oc1 bis ocN) unterschiedliche Hilfsmodulationssignale (F1 bis FN) verwendet werden.

5.  Verfahren nach einem der Ansprüche 1 bis 3,
    **dadurch gekennzeichnet,**
    **daß** bei der Verwendung eines einzigen Hilfsmodulationssignals (F1) jedem optischen WDM-Signal (oc1 bis ocN) ein eigener Zeitschlitz zugeordnet wird, in dem das optische WDM-Signal (oc1 bis ocN) mit dem einzigen Hilfsmodulationssignal (F1) moduliert wird.

**6.** Verfahren nach einem der Ansprüche 1 bis 5,
**dadurch gekennzeichnet,**
**daß** die Modulation der optischen WDM-Signale (os1 bis osN) als Frequenzmodulation oder Phasenmodulation realisiert ist.

**7.** Verfahren nach einem der Ansprüche 1 bis 6,
**dadurch gekennzeichnet,**
**daß** zur Regelung der jeweiligen Wellenlänge ($\lambda$) des in einer optischen Sendeeinheit (OS1 bis OSN) erzeugten optischen WDM-Signals Regelsignale (rs1 bis rsN) in einer Regeleinheit (RU) gebildet werden, die über mindestens eine Kommunikationsverbindung (KV) an die einzelnen optischen Sendeeinheiten (OS1 bis OSN) übertragen werden.

**8.** Verfahren nach Anspruch 7,
**dadurch gekennzeichnet,**
**daß** der Regeleinheit (RU) mindestens ein Referenztaktsignal (rt1 bis rtN) der optischen Sendeeinheiten (OS1 bis OSN) des optischen WDM-Übertragungssystems (WDM-S) zugeführt wird und mindestens ein Hilfsmodulationssignal (F1 bis FN) mit Hilfe des mindestens einen Referenztaktsignals (rt1 bis rtN) aus dem mindestens einen elektrischen Signal (es, es1 bis esN) rückgewonnen wird.

**9.** Anordnung zur Stabilisierung der Wellenlänge ($\lambda$) mehrerer in optischen Sendeeinheiten (OS1 bis OSN) erzeugten optischen WDM-Signale (os1 bis osN) eines optischen WDM-Übertragungssystems (WDM-S), wobei die optischen Sendeeinheiten (OS1 bis OSN) zur Bildung eines optischen WDM-Übertragungssignals (WOC) an eine optische Multiplexereinheit (OM) angeschlossen sind,
**dadurch gekennzeichnet,**
**daß** optische Sendeeinheiten (OS1 bis OSN) vorgesehen sind, die zur Modulation der erzeugten optischen WDM-Signale (oc1 bis ocN) mit einem Hilfsmodulationssignal (F1 bis FN) ausgebildet sind,
**daß** die Multiplexereinheit (OM) zur leitungstechnischen Konzentration der modulierten optischen WDM-Signale (oc1[F1] bis ocN[FN]) zu einem optischen WDM-Übertragungssignal (WOC) vorgesehen ist,
**daß** eine optische Koppeleinheit (OK) zur Auskopplung eines Teils des optischen WDM-Übertragungssignals (WOC) vorgesehen ist,
**daß** eine Regeleinheit (RU) zur Umsetzung des ausgekoppelten optischen WDM-Übertragungssignals (WOC') in ein elektrisches Signal (es) und zur Detektion der einzelnen Hilfsmodulationssignale (F1 bis FN) aus dem elektrischen Signal (es) vorgesehen ist, wobei in der Regeleinheit (RU) jeweils die Amplitude ($A_\lambda$) der durch die Filterfunktion (FF) der Multiplexereinheit (OM) amplitudenmodulierten Hilfsmodulationssignale (F1 bis FN) ermittelt wird und abhängig davon jeweils ein Regelsignal (rs1 bis rsN) zur Stabilisierung der Wellenlänge ($\lambda$) des jeweiligen optischen WDM-Signals (oc1 bis ocN) gebildet wird, daß mindestens eine Kommunikationsverbindung (KV) zwischen der Regeleinheit (RU) und den optischen Sendeeinheiten (OS1 bis OSN) zur Übertragung der Regelsignale (rs1 bis rsN) und von Referenztaktsignalen (rt1 bis rtN) vorgesehen ist, wobei mit Hilfe der Regelsignale (rs1 bis rsN) die Wellenlänge ($\lambda$) der optischen WDM-Signale (oc1 bis ocN) geregelt wird.

**10.** Anordnung zur Stabilisierung der Wellenlänge ($\lambda$) mehrerer in optischen Sendeeinheiten (OS1 bis OSN) erzeugten optischen WDM-Signale (oc1 bis ocN) eines optischen WDM-Übertragungssystems, wobei die optischen Sendeeinheiten (OS1 bis OSN) zur Bildung eines optischen WDM-Übertragungssignals (WOC) an eine optische Multiplexereinheit (OM) angeschlossen sind, die über eine optische Übertragungsfaser (OF1) mit einer Demultiplexereinheit (ODM) verbunden ist,
**dadurch gekennzeichnet,**
**daß** optische Sendeeinheiten (OS1 bis OSN) vorgesehen sind, die zur Modulation der erzeugten optischen WDM-Signale (oc1 bis ocN) mit einem Hilfsmodulationssignal (F1 bis FN) ausgebildet sind,
**daß** die Multiplexereinheit (OM) zur leitungstechnischen Konzentration der modulierten optischen WDM-Signale (oc1[F1] bis ocN[FN]) zu einem optischen WDM-Übertragungssignal (WOC) vorgesehen ist,
**daß** die Demultiplexereinheit (ODM) zur Rückgewinnung der modulierten optischen WDM-Signale (oc1'[F1] bis ocN'[FN]) aus dem übertragenen optischen WDM-Übertragungssignal (WOC) vorgesehen ist,
**daß** mehrere Koppeleinheiten (OK1 bis OKN) zur Auskopplung eines Teils der modulierten optischen WDM-Signale (oc1'[F1] bis ocN'[FN]) vorgesehen sind,
**daß** mindestens eine Regeleinheit (RU) zur Umsetzung der ausgekoppelten modulierten optischen WDM-Signale in elektrische Signale (es) und zur Detektion der einzelnen Hilfsmodulationssignale (F1 bis FN) aus den elektrischen Signalen (es) vorgesehen ist, wobei in der Regeleinheit (RU) jeweils die Amplitude ($A_\lambda$) der durch die Filterfunktion (FF) der Multiplexereinheit (OM) und der Demultiplexereinheit amplitudenmodulierten Hilfsmodulationssignale (F1 bis FN) ermittelt wird und abhängig davon jeweils ein Regelsignal (rs1 bis rsN) zur Stabilisierung der Wellenlänge ($\lambda$) des jeweiligen optischen WDM-Signals (oc1 bis ocN) gebildet wird,
**daß** mindestens eine Kommunikationsverbindung (KV) zwischen der mindestens einen Regeleinheit (RU) und den optischen Sendeeinheiten (OS1 bis OSN) zur Übertragung der Regelsignale (rs1 bis rsN) und von Referenztaktsignalen (rt1 bis rtN) vorgesehen ist, wobei mit Hilfe der Regelsignale (rs1 bis rsN) die Wellenlänge (λ) der optischen WDM-Signale (oc1 bis ocN) geregelt wird.

11. Anordnung nach Anspruch 9,
**dadurch gekennzeichnet,**
**daß** in der Regeleinheit (RU) eine opto-elektrische Wandlereinheit (OEW) zur Umsetzung des ausgekoppelten Teils des optischen WDM-Übertragungsignals (WOC') in ein elektrisches Signal (es) vorgesehen ist, dessen Bandbreite mindestens die Frequenzen der Hilfsmodulationssignale (F1 bis FN) umfaßt.

12. Anordnung nach Anspruch 10,
**dadurch gekennzeichnet,**
**daß** in der Regeleinheit (RU) mindestens eine opto-elektrische Wandlereinheit (OEW) zur Umsetzung der ausgekoppelten Teile der modulierten optischen WDM-Signale (oc1'[F1] bis ocN'[FN]) in elektrische Signale (es1 bis esN) vorgesehen ist, dessen Bandbreite mindestens die Frequenzen der Hilfsmodulationssignale (F1 bis FN) umfaßt.

13. Anordnung nach einem der Ansprüche 9 bis 12,
**dadurch gekennzeichnet,**
**daß** die Regeleinheit (RU) eine Synchrondetektionseinheit (SDE) zur Detektion des mindestens einen Hilfsmodulationssignals (F1 bis FN) aus den mindestens einen elektrischen Signal (es, es1 bis esN) mit Hilfe der Referenztaktsignale (rt1 bis rtN) der optischen Sendeeinheiten (OS1 bis OSN) aufweist.

14. Anordnung nach Anspruch 9 und 10,
**dadurch gekennzeichnet,**
**daß** die Regeleinheit (RU) eine Bewertungseinheit (BU) zur Ermittlung der Amplitude ($A_\lambda$) der amplitudenmodulierten Hilfsmodulationssignale (F1 bis FN) aufweist.

# FIG 1

EP 1 191 717 A2

# FIG 2

# FIG 3

**FIG 4**

WDM-S

$oc1[F1]$
$oc2[F2]$
$oc(N-1)[F(N-1)]$
$ocN[FN]$

OS1 e
OS2 e
OS(N-1) e
OSN e
ri

OVF1
OVF2
OVF(N-1)
OVFN

i1
i2
i(N-1)
iN

OM
e

woc

OF1

ODM
i

e1
e2
e(N-1)
eN

ok1
ok2
ok(N-1)
okN

$oc1'[F1]$
$oc2'[F2]$
$oc'(N-1)[F(N-1)]$
$ocN'[FN]$

OWVF1
OWVF2
OWVF(N-1)
OWVFN

i OE1
i OE2
i OE(N-1)
i OEN

OKF

KV

rt1-rtN

N

rs1-rsN

$F_1 < F_2 < ... < F_N$

e1½   i1-iN

RU

EP 1 191 717 A2